# EUROPEAN PATENT SPECIFICATION

(11) **EP 3 725 488 B1**
(45) Date of publication and mention of the grant of the patent: **22.05.2024**
(21) Application number: 18887933.2
(22) Date of filing: 14.11.2018
(51) Int. Cl.: B29C 45/14, F21V 3/04

(54) **DECORATIVE MOLDED BODY, METHOD FOR PRODUCING SAME AND LIGHT EMITTING STRUCTURE WHICH USES DECORATIVE MOLDED BODY**
DEKORATIVER FORMKÖRPER, VERFAHREN ZUR HERSTELLUNG DAVON UND LICHTEMITTIERENDE STRUKTUR, DIE DEN DEKORATIVEN FORMKÖRPER VERWENDET
CORPS MOULÉ DÉCORATIF, SON PROCÉDÉ DE PRODUCTION ET STRUCTURE ÉLECTROLUMINESCENTE QUI UTILISE UN CORPS MOULÉ DÉCORATIF

(30) Priority: 15.12.2017 JP 2017241066
(43) Date of publication of application: 21.10.2020
(73) Proprietor: Kuraray Co., Ltd., Kurashiki-shi, Okayama 710-0801 (JP)
(72) Inventor: ITO, Toshiyuki, Tokyo 100-0004 (JP); EGUCHI, Daisuke, Tokyo 100-0004 (JP)
(74) Representative: Vossius & Partner Patentanwälte Rechtsanwälte mbB
(86) International application number: PCT/JP2018/042135
(87) International publication number: WO 2019/116813

(56) References cited:
- JP-A- H0 222 021
- JP-A- H0 222 021
- JP-A- 2006 001 078
- JP-A- 2006 001 078
- JP-A- 2007 118 376
- JP-A- 2017 170 854
- JP-A- 2017 170 854
- JP-A- 2017 206 139
- JP-A- 2017 206 139
- JP-A- 2017 210 184
- JP-A- 2018 024 961

## Description

### [Technical Field]

The present invention relates to a decorative molded body in which a skin material containing a fiber material is integrated with the surface of a resin molded body, a production method thereof and a light-emitting structure comprising a decorative molded body.

### [Background Art]

Decorative molded bodies in which a skin material containing a fiber material is integrated with the surface of a resin molded body are known. For example, such a decorative molded body is produced through insert molding (in-molding) in which a sheet containing a fiber material or a skin material thereof, which is a preform molded body obtained by shaping the sheet, is disposed in the cavity of a mold, and then subjected to injection molding, or is produced by manually attaching the skin material, which is a preform molded body, to the surface of a resin molded body that has been molded in advance.

As the skin material containing a fiber material, a fiber material such as a non-woven fabric or a woven fabric, a leather-like material such as an artificial leather or synthetic leather containing a fiber material, and a skin material containing a paper-like fiber material are used. For example, PTL 1 listed below discloses a molded body obtained as follows: An insert material that has a suede-like or grain-finished tactile impression and has been obtained by attaching a reinforcing sheet to the back surface of an artificial leather is formed into a three-dimensional shape through preforming, and the insert material is punched into a required shape, and is housed in the cavity of an injection molding mold, followed by injecting a molten resin from the reinforcing sheet side of the insert material, thereby molding a resin molded body and simultaneously integrating the insert material with the surface thereof.

Although a skin material containing a fiber material is not used, PTL 2 listed below discloses a decorative part in which a skin material such as thermoplastic urethane or polyvinyl chloride is stacked on the surface of a base material, wherein through holes reaching the base material are formed in the skin material. Also, PTL 3 listed below discloses a skin of a vehicle interior part, wherein the skin includes a front surface material that forms a design surface of the vehicle interior part, a back surface material that is disposed on the backside of the front surface material, a bonding layer that bonds and fixes the front surface material and the back surface material in the thickness direction, and a hole portion that is open on the design surface side. PTL 4 discloses a method for producing a decorative article in which a decorative sheet having a plurality of holes formed thereon is arranged on either or both molding surfaces of a pair of molds. The molds are closed and a molten resin is injected into a cavity of the molds to mold the molten resin integrally with the decorative sheet so that a plurality of seam-like parts blocking the plurality of holes are aligned on the decorative surface side. PTL 5 discloses a synthetic resin molding having an integrated flexible skin material. A hole is formed in the skin material as a release part.

### [Citation List]

### [Patent Literatures]

[PTL 1] JP 2006 281592 A
[PTL 2] JP 2017 206139 A
[PTL 3] JP 2017 210184 A
[PTL 4] JP 2017 170854 A
[PTL 5] JP 2007 118376 A

### [Summary of Invention]

### [Technical Problem]

There has been a need to impart a novel external appearance to a decorative molded body in which a skin material containing a fiber material is integrated with the surface of a resin molded body. It is an object of the present invention to provide a decorative molded body that uses, as a skin material thereof, a skin material that contains a fiber material and that has a through hole, wherein a resin molded body can be visually recognized through the through hole, and the shape of the through hole is less likely to be deformed, and to provide a light-emitting structure that uses the decorative molded body and a production method thereof.

### [Solution to Problem]

An aspect of the present invention is directed to a decorative molded body as defined by claim 1. Preferred embodiments are defined by the features of the respective dependent claims. The decorative molded body includes: a resin molded body: and a skin material that contains a fiber material and that is stacked on a surface of the resin molded body, wherein the skin material has a through hole, and the surface of the resin molded body is present in the through hole. With such a decorative molded body, since the surface of the resin molded body is present in the through hole, the resin molded body can be visually recognized through the through hole. In addition, since the through hole is supported by the resin molded body, it is possible to obtain an aesthetically excellent decorative molded body in which the shape of the through hole is less likely to be deformed. A ratio (Hr/d) of a height (Hr) of the surface of the resin molded body relative to a depth (d) of the through hole is 0.3 to 1.

It is preferable that the skin material includes a mesh-like region having a multiplicity of the through holes, because it is possible to form an external appearance with a particularly good design quality.

When the skin material includes a mesh-like region having a multiplicity of the through holes, it is preferable that the through holes have an average circle equivalent diameter in the range of 0.1 to 3 mm, because excellent design quality can be achieved, and the surface of the resin molded body can be easily present in the through holes.

It is preferable that the resin molded body has optical transmission, because light can be transmitted from the through hole.

It is preferable that the skin material is an artificial leather, because an excellent texture is provided.

Another aspect of the present invention is directed to a light-emitting structure in which the resin molded body has optical transmission in the above-described decorative molded body, and that includes a light source disposed on the resin molded body side of the decorative molded body. With such a light-emitting structure, by transmitting the light from the light source from the through hole of the skin material, it is possible to obtain a light-emitting structure that has a novel design in which light is emitted only from the through hole.

Another aspect of the present invention is directed to a production method of a decorative molded body as defined by the features of independent claim 9. Preferred embodiments are defined by the features of the respective dependent claims. The production method includes the steps of: housing, in a cavity of an injection molding mold, a skin material that contains a fiber material and that has a through hole; and injecting a molten resin into the injection molding mold, thereby forming a decorative molded body in which the skin material is integrated with a surface of an injection-molded body that is molded, wherein molding is performed such that the surface of the resin molded body is present in the through hole. With such a production method, the surface of the resin molded body can be present in the through hole. A ratio (Hr/d) of a height (Hr) of the surface of the resin molded body relative to a depth (d) of the through hole is 0.3 to 1.

It is preferable that the skin material includes a mesh-like region having a multiplicity of the through holes, because it is possible to form an external appearance with excellent design quality.

It is preferable that the skin material is shaped into a shape corresponding to a shape of the cavity, and is housed in the cavity, because the alignment during injection molding is facilitated.

### [Advantageous Effects of Invention]

According to the present invention, it is possible to provide a decorative molded body that uses, as a skin material thereof, a skin material that contains a fiber material and that has a through hole, wherein a resin molded body can be visually recognized through the through hole, and the shape of the through hole is less likely to be deformed, and to provide a light-emitting structure that uses the decorative molded body and a production method thereof.

### [Brief Description of Drawing(s)]

[FIG. 1] FIG. 1 shows schematic diagrams illustrating a decorative molded body 10 according to an embodiment.
[FIG. 2] FIG. 2 is an explanatory diagram illustrating the ratio (Hr/d) of the height (Hr) of the surface of a resin molded body relative to the depth (d) of a through hole.
[FIG. 3] FIG. 3 shows schematic diagrams illustrating a light-emitting structure 20 that uses the decorative molded body 10 of the present embodiment.
[FIG. 4] FIG. 4 shows explanatory diagrams for illustrating steps of hot press molding for molding a preform molded body.
[FIG. 5] FIG. 5 is a top view of a sheet 3 that contains a fiber material and that includes a mesh-like region having multiple through holes.
[FIG. 6] FIG. 6 shows explanatory diagrams illustrating a method for producing a decorative molded body using a preform molded body through insert molding.

### [Description of Embodiment]

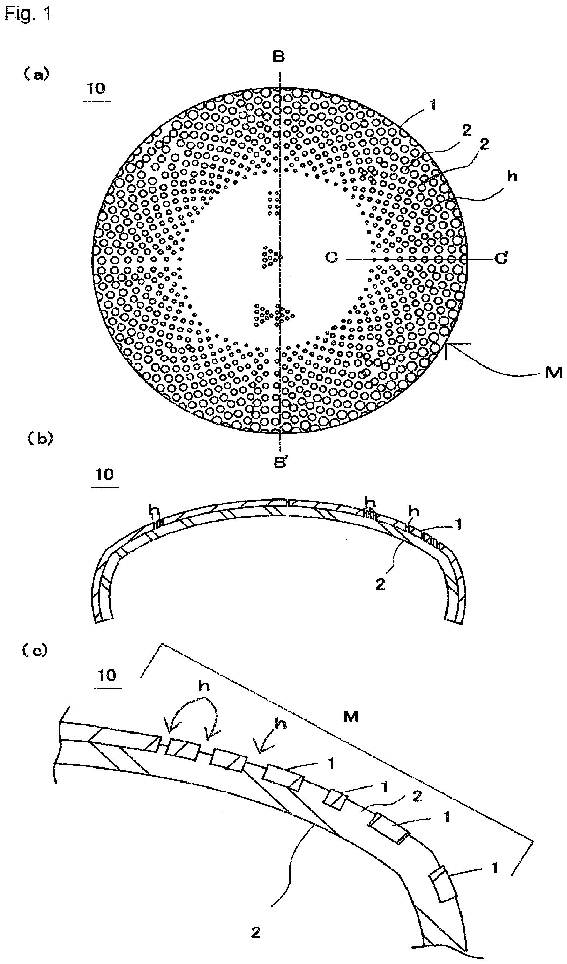

A decorative molded body according to the present embodiment will be described with reference to FIG. 1.

FIG. 1 shows schematic diagrams illustrating a decorative molded body 10 according to the present embodiment, wherein FIG. 1(a) is a top view, FIG. 1(b) is a cross-sectional view taken along the line B-B' in FIG. 1(a), and FIG. 1(c) is an enlarged cross-sectional view taken along the line C-C' in FIG. 1(a).

In FIG. 1, reference numeral 1 denotes a skin material containing a fiber material, reference numeral 2 denotes a resin molded body, and reference numeral h denotes a through hole formed in the skin material 1. As shown in FIG. 1(a), in the decorative molded body 10, the skin material 1 that contains a fiber material and that includes a mesh-like region M formed by arranging multiple circular through holes h as seen in a top view is integrated with the surface of the resin molded body 2 as shown in FIG. 1(b), and the resin molded body 2 can be visually recognized through the through holes h. The mesh-like region M having the through holes h forms an external appearance provided with a design quality. As shown in FIG. 1(c), in the decorative molded body 10, the surface of the resin molded body 2 has entered into the through holes h. Note that the mesh-like region means, for example, a region having an area of 4 mm² or more, preferably 25 mm² or more, wherein the total porosity due to the multiple through holes is 10% or more.

In the decorative molded body 10, since the surface of the resin molded body 2 has entered the through holes h, the resin molded body 2 can be visually recognized through the through holes h. In addition, since the through holes h are supported by the resin molded body 2 that has entered thereinto, tearing, the deformation of the through holes h, fracture, and the like are less likely to occur in the skin material 1, so that the shape of the through holes h is less likely to be deformed. Additionally, fraying, fuzzing and the like are less likely to occur even if the vicinity of the through holes h is subjected to friction.

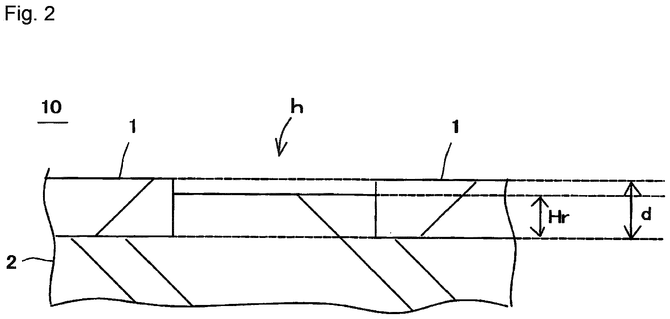

As shown in FIG. 2, as for the height of the surface of the resin molded body 2 that is present in the through holes h, the ratio (Hr/d) of the height (Hr) of the surface of the resin molded body 2 relative to the depth (d) of the through holes h is 0.3 to 1, preferably 0.5 to 0.9, because the resin molded body 2 can be easily visually recognized through the through holes h, and exhibits excellent shape retainability for the through holes h. In addition, in the case of using the decorative molded body 10 as a light-emitting structure, the light-emitting structure has excellent optical transmission. Note that the ratio (Hr/d) of the height (Hr) of the surface of the resin molded body 2 that has entered, relative to the depth (d) of a through hole h can be calculated by cutting the molded body in the cross-sectional direction, and measuring each of the depth of the through hole h and the height of the surface of the molded body that has entered the through hole h, using an optical microscope or a digital microscope.

As for the size of the through holes, the average circle equivalent diameter is preferably 0.1 to 3 mm, more preferably 0.3 to 2 mm, because excellent design quality is provided, and the surface of the resin molded body can be easily caused to enter into the through holes during molding. Note that the circle equivalent diameter means a diameter converted into the diameter of a circle having the same area. When the circle equivalent diameter of a through hole is too small, the surface of the resin molded body tends to be less likely to enter the through hole during molding for integrating the skin material with the resin molded body. On the other hand, when the circle equivalent diameter of the through hole is too large, the surface of the resin molded body tends to overflow the through hole so as to project therefrom during molding for integrating the skin material with the resin molded body, resulting in a reduction in the design quality of the external appearance.

When the multiple through holes form a mesh-like region, the pitch between the centers of adjacent through holes is preferably 0.05 to 2.0 mm, more preferably 0.2 to 2.0 mm, because tearing, the deformation of the through holes, fracture, and the like are less likely to occur in the skin material. The size of the area of the mesh-like region is preferably 100 or more, more preferably 50% or more of the size of the area of the molded article, because excellent design quality is provided, and the effects of the present invention become prominent. Furthermore, the length of a portion of the mesh-like region that separates adjacent through holes of the skin material is preferably 0.1 to 1.5 mm, more preferably 0.2 to 1.0 mm, because excellent design quality is provided, and tearing is less likely to occur during molding. Note that each of the dimensions is a dimension in a skin material that has been integrated with the decorative molded body. Since the skin material is slightly elongated after molding, each of the dimensions before molding tends to be slightly smaller than the corresponding one of the above-described dimensions.

Examples of the skin material include a fiber material sheet such as a non-woven fabric, a woven fabric, or a knitted fabric, and a leather-like sheet such as an artificial leather or a synthetic leather in which an elastic polymer such as urethane is applied to the fiber material. The thickness of the skin material is not particularly limited, but is preferably 0.1 to 2 mm, more preferably 0.2 to 1 mm.

Specific examples of the resin molded body include acrylic-based resins such as an ABS resin and a PMMA resin, polystyrene-based resins, polycarbonate-based resins, polyolefin-based resins such as polypropylene, polyester-based resins such as polyethylene terephthalate (PET) and polybutylene terephthalate (PBT), various polyamide-based resins, and COP resins. These may be a compound article with which a filler or the like is mixed, or a mixture article in which a plurality of kinds of resins are alloyed or blended. These may be selected as appropriate according to the usage. Among these, resin molded bodies having optical transmission of acrylic resins such as an ABS resin and a PMMA resin, polystyrene-based resins, polycarbonate-based resins, polyester-based resins, and COP resins, each of which has optical transmission, are preferable, because they can be used as a light-emitting structure described below for which the optical transmission of the resin molded body is utilized.

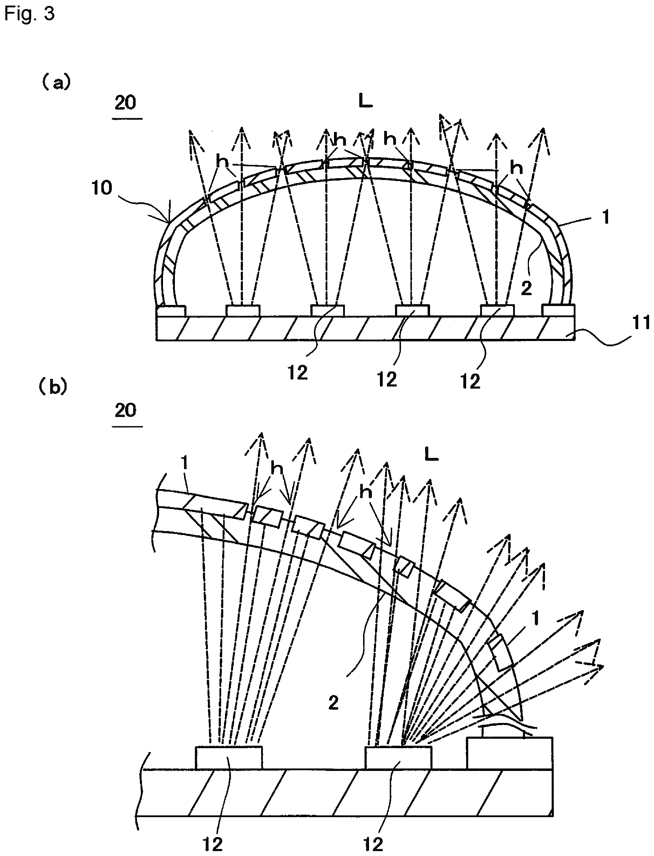

FIG. 3 shows schematic diagrams illustrating a light-emitting structure 20 that uses the decorative molded body 10 of the present embodiment, wherein FIG. 3(a) is a cross-sectional view corresponding to FIG. 1(b) and FIG. 3(b) is a cross-sectional view corresponding to FIG. 1(c). In the light-emitting structure 20, the resin molded body 2 that forms the decorative molded body 10 has optical transmission. Also, a light source 12 mounted on a substrate 11 is disposed on the resin molded body 2 side of the decorative molded body 10. The light source 12 is formed by mounting, for example, a plurality of light-emitting elements such as LEDs on the substrate 11. With such a light-emitting structure 20, the light emitted from the light source 12 transmits through the resin molded body 2, and the light can be transmitted and emitted only from the through holes of the skin material, as indicated by the dashed arrows. As for the optical transmission, the visible light transmittance is preferably 50% or more, more preferably 70% or more, particularly preferably 85% or more.

Next, as a production method of the decorative molded body of the present embodiment, with reference to the drawings, a description will be given of a production method using insert molding in which, after producing a preform molded body obtained by preforming a skin material containing a fiber material into a shape conforming to a cavity of a mold used for injection molding, the preform molded body is housed in the cavity of the mold, and subjected to injection molding.

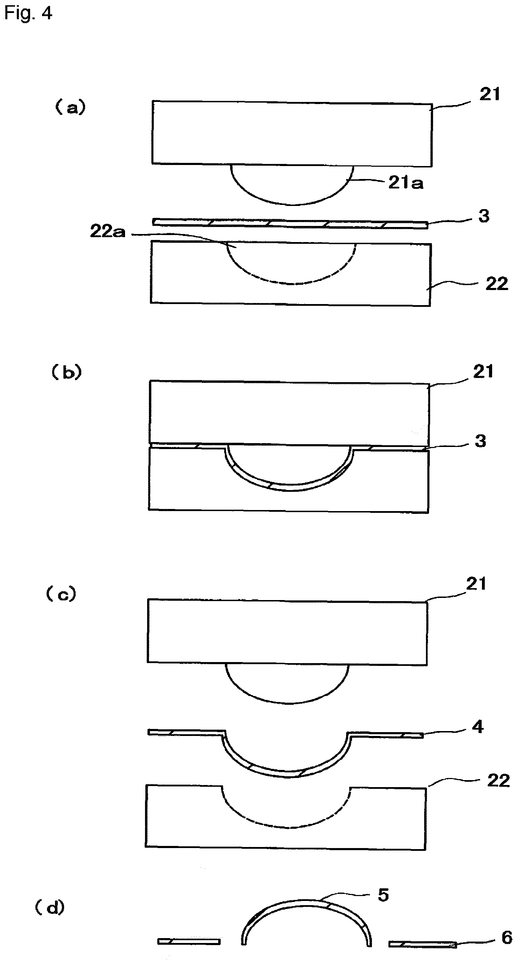

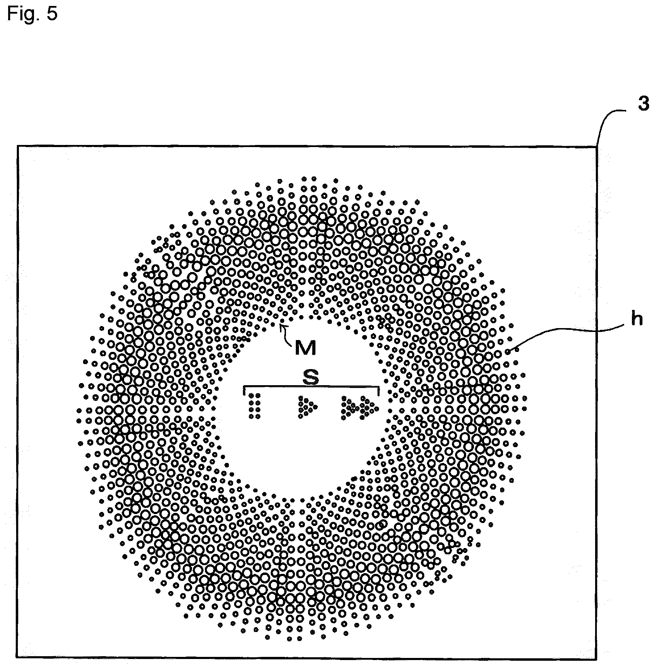

FIG. 4 shows explanatory diagrams for illustrating steps of hot press molding for molding a preform molded body serving as a skin material containing a fiber material. In FIG. 4, reference numeral 3 denotes a sheet that contains a fiber material and that includes a mesh-like region having multiple through holes, reference numeral 21 denotes a male mold for hot pressing, reference numeral 22 denotes a female mold for hot pressing, reference numeral 21a denotes a core of the male mold 21, and reference numeral 22a denotes a cavity of the female mold 22. In addition, reference numeral 4 denotes a preform molded body before being trimmed, reference numeral 5 denotes a preform molded body, and reference numeral 6 denotes an unnecessary portion of the trimmed sheet 3. FIG. 5 is a top view of the sheet 3 that contains a fiber material and that includes a mesh-like region having multiple through holes.

As shown in FIG. 5, the sheet 3 containing a fiber material includes a mesh-like region M having multiple through holes h. In addition, the sheet 3 includes another mesh-like region indicating icons S representing the playback, pause, and fast-forwarding of an acoustic device, as an example of the design formed using the through holes h. Like the icons S, sign indications can be formed by combining the through holes h. Although the method for forming such through holes is not particularly limited, it is preferable to perform, for example, drilling using a drill of a multiaxial drilling machine under NC control, because the through holes can be formed at accurate positions.

First, as shown in FIG. 4(a), the sheet 3 is disposed between the female mold 22 and the male mold 21. At this time, the female mold 22 and the male mold 21 are heated to a predetermined temperature for softening the sheet 3. Then, as shown in FIG. 4(b), the female mold 22 and the male mold 21 are clamped together under a predetermined pressure. At this time, the sheet 3 is shaped by being sandwiched between the core 21a of the male mold 21 and the cavity 22a of the female mold 22.

Then, as shown in FIG. 4(c), the female mold 22 and the male mold 21 are opened, and then cooled, whereby a preform molded body 4 before being trimmed is obtained. Then, the preform molded body 4 before being trimmed is removed from the female mold 22 and the male mold 21, and an unnecessary portion 6 of the sheet 3 is trimmed, whereby a preform molded body 5 is obtained.

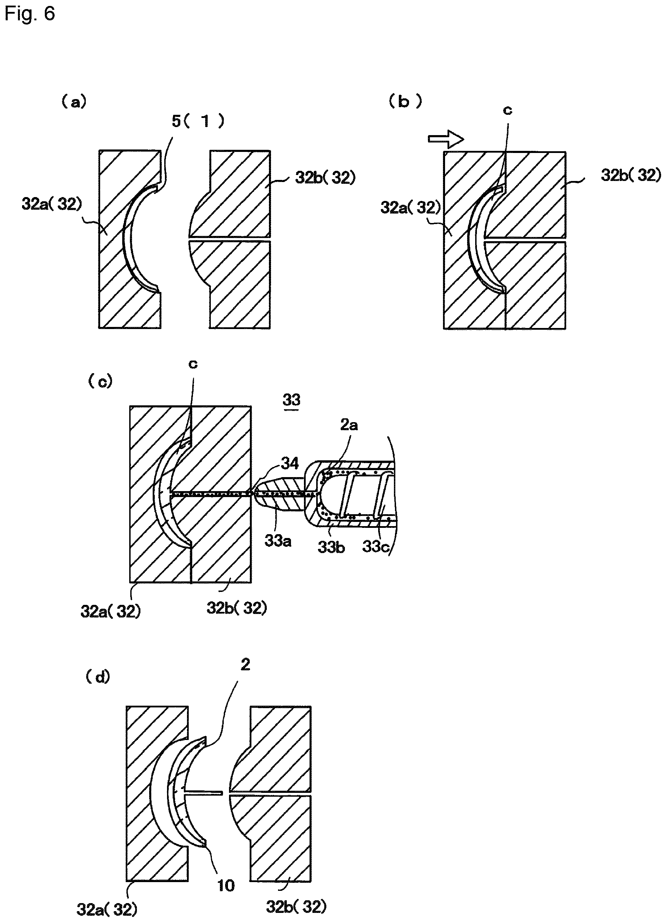

The preform molded body thus obtained is integrated with the surface of the resin molded body, to form a decorative molded body. As the method for integrating the preform molded body with the resin molded body, it is preferable to use insert molding in which a preform molded body is integrated with a resin molded body molded through injection molding. Referring to FIG. 6, a description will be given of a method for producing a decorative molded body 10 obtained by integrating, through insert molding, a preform molded body 5 used as a skin material 1 to a resin molded body 2 that is injection-molded. Note that although a method for performing insert molding using the preform molded body 5 as the skin material 1 is described in the present embodiment, the sheet 3 may be directly subjected to insert molding in place of the preform molded body 5. In the case of using the preform molded body 5, alignment can be performed accurately during integration with the resin molded body 2.

In FIG. 6, reference numeral 5 denotes a preform molded body, which is the skin material 1 that contains a fiber material and that has through holes (not shown), reference numeral 32a denotes a movable mold, reference numeral 32b denotes a fixed mold, reference numeral 33 denotes a body of an injection portion of an injection molding machine, reference numeral 33a denotes a nozzle, reference numeral 33b denotes a cylinder, reference numeral 33c denotes an in-line screw, reference numeral 34 denotes a gate, reference numeral 2 denotes a resin molded body, reference numeral 2a denotes a molten resin, and reference numeral 10 denotes a decorative molded body. The movable mold 32a and the fixed mold 32b, as a pair, constitute an injection molding mold 32 that forms the cavity c. Note that, in the present embodiment, the movable mold 32a is a female mold of the injection molding mold, and the fixed mold 32b is a male mold of the injection molding mold.

First, as shown in FIG. 6(a), the preform molded body 5 as the skin material 1 is housed in a recess of the movable mold 32a for forming the cavity.

Next, as shown in FIG. 6(b), the movable mold 32a and the fixed mold 32b are clamped together. Then, as shown in FIG. 6(c), the cavity c formed in a state in which the movable mold 32a and the fixed mold 32b are clamped together is filled with the molten resin 2a. More specifically, the injection portion 33 of the injection molding machine is moved forward so as to bring the nozzle 33a into abutment against the gate 34 formed in the fixed mold 32b, and the molten resin 2a is injected inside the cavity c by using the in-line screw 33c, whereby the cavity c is completely filled with the molten resin 2a under a predetermined filling pressure.

The injection molding conditions may be appropriately set to conditions under which complete filling can be performed (resin temperature, mold temperature, injection pressure, injection speed, holding pressure after injection, cooling time) according to the thermal properties or melt viscosity of the resin to be injected, the shape of the molded body, and the resin thickness. The ratio (Hr/d) of the height (Hr) of the surface relative to the depth (d) of the through holes can be adjusted by adjusting the molding conditions.

The thickness of the injection-molded body that is molded is not particularly limited, and may be selected as appropriate according to the usage and the moldability. For example, for use in home electrical appliances, a thickness range of preferably 0.3 to 3 mm, more preferably 0.5 to 2 mm is selected as a preferable range.

Then, in a cooling step, a stack in which the resin molded body 2 that has been molded in the cavity c formed in a state in which the movable mold 32a and the fixed mold 32b are clamped together and the skin material 1, which is the preform molded body 5 stacked on the resin molded body 2, are integrated with each other is cooled for a predetermined time. Thereafter, as shown in FIG. 6(d), the movable mold 32a and the fixed mold 32b are opened, and a decorative molded body 10 in which the resin molded body 2 that has been molded and the skin material 1 stacked on the resin molded body 2 are integrated with each other is removed.

As described thus far, by insert molding using the skin material that contains a fiber material and that has the through holes, the molten resin used when molding the resin molded body enters the through holes, and the surface of the resin molded body enters the through holes of the skin material in the decorative molded body formed. Thus, the resin molded body can be visually recognized through the through holes. In addition, since the resin molded body supports the through holes formed in the skin material, it is possible to obtain a decorative molded body in which the shape of the through holes is less likely to be deformed.

Note that examples of the skin material include a fiber material sheet such as a non-woven fabric, a woven fabric, or a knitted fabric, and a leather-like sheet such as an artificial leather or synthetic leather containing a fiber material. Among these, an artificial leather is preferable in that it can be easily elongated during molding, and therefor has excellent shaping properties and also exhibits excellent design quality. In the following, as the skin material, an artificial leather will be described in detail in the present embodiment.

Examples of the artificial leather include a napped artificial leather that includes an artificial leather gray fabric obtained by applying an elastic polymer to a non-woven fabric serving as a fiber material, and whose surface has been napped, and a grain-finished artificial leather with which a grain-finished resin layer is provided.

Specific examples of the resin that forms fibers of the non-woven fabric include thermoplastic resins, including, aromatic polyester-based resins such as polyethylene terephthalate (PET), a modified PET, polybutylene terephthalate (PBT), polytrimethylene terephthalate (PTT), polytriethylene terephthalate, polyhexamethylene terephthalate, polypropylene terephthalate, and polyethylene naphthalate; aliphatic polyester-based resins such as polylactic acid, polyethylene succinate, polybutylene succinate, polybutylene succinateadipate, and a polyhydroxybutyrate-polyhydroxyvalerate copolymer; polyamide-based resins such as polyamide 6, polyamide 66, polyamide 610, polyamide 10, polyamide 11, polyamide 12, and polyamide 6-12; polyolefin-based resins such as polypropylene, polyethylene, polybutene, polymethyl pentene, a chlorine-based polyolefin, an ethylene vinyl acetate copolymer, and a styrene ethylene copolymer; modified polyvinyl alcohol-based resins formed, for example, from a modified polyvinyl alcohol containing 25 to 70 mol% of an ethylene unit; and crystalline elastomers such as a polyurethane-based elastomer, a polyamide-based elastomer, and a polyester-based elastomer. These may be used alone or in a combination of two or more.

The fineness of the fibers that form the non-woven fabric is not particularly limited, and may be a fineness of regular fibers, which exceeds 1 dtex, or may be a fineness of ultrafine fibers, which is preferably 1 dtex or less, more preferably 0.6 dtex or less, particularly preferably 0.5 dtex or less. A non-woven fabric of ultrafine fibers is preferable in that it can be easily elongated during preform molding and insert molding, and therefore is less likely to cause tearing, deformation of the through holes, fracture, and the like in the skin material.

Specific examples of the elastic polymer applied to the non-woven fabric include various polyurethanes such as a polycarbonate-based polyurethane, a polyester-based polyurethane, and a polyether-based polyurethane, acrylic elastic bodies, polyurethane acrylic composite elastic bodies, polyvinyl chloride, and synthetic rubbers. Among these, polyurethanes are preferable because of the excellent adhesion and mechanical properties. The content ratio of the elastic polymer is preferably 0.1 to 50 mass%, more preferably 5 to 35 mass%, particularly preferably 8 to 30%. When the content ratio of the elastic polymer is too high, the shaping properties tend to be reduced.

A napped artificial leather can be obtained by napping one surface of the artificial leather gray fabric obtained by applying the elastic polymer to the non-woven fabric. Also, a grain-finished artificial leather can be obtained by stacking a grain-finished resin layer on one surface of the artificial leather gray fabric obtained by applying the elastic polymer to the non-woven fabric.

Examples of the method for forming the napped artificial leather include a method in which a suede-like or nubuck-like napped surface napped by buffing the surface of the artificial leather gray fabric is formed. Buffing is a treatment in which the surface of the artificial leather gray fabric is rubbed using sandpaper, a brush or the like so as to nap the fibers.

Examples of the method for forming the grain-finished artificial leather include a method in which a grain-finished resin layer containing an elastic polymer such as polyurethane is formed on the surface of the artificial leather gray fabric by a method such as dry forming or direct coating. As the elastic polymer that forms the grain-finished resin layer, it is possible to use polyurethane and an acrylic elastic body that have been conventionally used for formation of a grain-finished resin layer.

Throughs hole are formed in the skin material according to the present embodiment. In the case of preform molding or insert molding a skin material having through holes, when the skin material is elongated by being heated in the molding steps, the shape of the through holes may not be retained, or a portion of the skin material that separates adjacent through holes may be fractured. Also, in the case of performing preform molding, shaping properties are required. From such a viewpoint, in the case of using an artificial leather as the skin material, it is preferable to select an artificial leather having the following properties.

For an artificial leather in which mesh-like through holes are formed, when the breaking elongation is too low, a portion of the skin material that separates adjacent through holes is likely to be fractured during preform molding or insert molding. In this respect, the breaking elongation at 20°C of the artificial leather is preferably 50% or more, more preferably 100% or more. In addition, the breaking stress at 20°C of the artificial leather is preferably 50 N/2.5 cm or more, more preferably 100 N/2.5 cm or more. Note that the breaking elongation and the breaking stress indicate the stress and the elongation, as measured using a tensile tester at a speed of 100 mm/min.

### [Examples]

Hereinafter, the present invention will be described more specifically by way of examples.

### (Example 1)

An artificial leather (having an apparent density of 0.50 g/cm³ and including modified PET ultrafine fibers with a fineness of 0.9 dtex and a T_{g} of 100°C and polyurethane) of 140 mm in height, 140 mm in width, and 0.5 mm in thickness having a suede-like napped surface was prepared. Note that the obtained artificial leather had a breaking elongation of 130% and a breaking stress of 250 N/2.5 cm at 20°C.

Then, using a drill of a multiaxial drilling machine under NC control, multiple through holes as shown in FIG. 5 were formed in the artificial leather. Through holes that form a mesh-like region indicating icons representing the playback, pause, and fast-forwarding of an acoustic device and an annular mesh-like region were formed. The mesh-like regions had seven types of circular through holes having a diameter of 0.2 mm, 0.4 mm, 0.6 mm, 0.8 mm, 1.0 mm, 1.2 mm, or 1.4 mm. The area thereof was approximately 2700 mm², and the porosity due to the voids of the through holes was in the range of 10 to 60%. In addition, the through holes of the mesh-like regions had a minimum pitch of 0.2 mm and a maximum pitch of 2.0 mm. In this manner, an artificial leather sheet A, which was a skin material that contained a fiber material and included mesh-like regions having multiple through holes, was produced.

Then, the artificial leather sheet A was subjected to hot press molding using a press mold for shaping the artificial leather sheet A into a shape corresponding to an injection molding mold, which will be described below, at a molded temperature of 100°C and a pressing pressure of 100 kg/cm², thus molding a preform molded body. At this time, the preform molded body of the artificial leather sheet A retained a tight shape conforming to the shape of the mold. Then, an unnecessary portion of the obtained preform molded body was trimmed so as to allow the preform molded body to be housed in a cavity of the injection molding mold.

Then, insert molding was performed using the preform molded body. Specifically, in a state in which the movable mold and the fixed mold of the injection molding mold mounted on an electric injection molding machine (SE-100 manufactured by Sumitomo Heavy Industries, Ltd.) were opened, the preform molded body of the artificial leather sheet A was disposed on a cavity-forming surface of the movable mold. Then, the movable mold and the fixed mold were clamped together. Note that the cavity of the injection molding mold had the shape of a semi-spherical dome with a thickness of 2 mm, a diameter of 80 mm, and a height of 10 mm.

Then, a transparent ABS resin was injected under the conditions of a resin temperature of 230°C and a mold temperature of 40°C, thus filling the inside of the cavity. Then, after complete filling of the cavity, the molds were cooled, and thereafter opened. In this manner, a decorative molded body in which the preform molded body was integrated with the surface of the transparent ABS resin molded body was obtained.

The obtained decorative molded body was cut in the cross-sectional direction, and the depths (d) of the through holes and the height (Hr) of the surface of the resin molded body that had entered the through holes were measured using a digital microscope, and the ratio (Hr/d) thereof was calculated. The ratio (Hr/d) of the height (Hr) of the surface of the resin molded body that has entered, relative to the depth (d) of the through holes was 0.5 for the through holes with a diameter of 0.2 mm, and 0.85 for the through holes with a diameter of 1.4 mm.

The obtained decorative molded body had excellent shape retainability, without causing tearing of the skin material, deformation of the through holes, or fracture. Also, tearing, deformation of the through holes, or fracture did not occur even when the surface of the skin material was rubbed by a fingernail. In addition, the decorative molded body had excellent design quality in emitting light from the through holes when light is transmitted therethrough.

### (Example 2)

An artificial leather sheet B, which was a skin material that contained a fiber material and included a mesh-like region having multiple through holes, was produced in the same manner except for using, in place of the artificial leather having a suede-like napped surface, a grain-finished artificial leather (having an apparent density of 0.6 g/cm³ and including modified PET ultrafine fibers with a fineness of 0.9 dtex and a T_{g} of 100°C and polyurethane) including a surface resin layer. Then, a preform molded body was molded in the same manner except for using the grain-finished artificial leather sheet B in place of the artificial leather sheet A having a suede-like napped surface. Note that the preform molded body was molded such that the grain-finished resin layer formed the outer surface of the dome. At this time, the preform molded body of the artificial leather sheet B retained a tight shape conforming to the shape of the mold.

Then, a decorative molded body was obtained by performing insert molding in the same manner as in Example 1 except for using the preform molded body of the artificial leather sheet B in place of the preform molded body of the artificial leather sheet A. In the obtained decorative molded body, the ratio (Hr/d) of the height (Hr) of the surface of the resin molded body that had entered, relative to the depth (d) of the through holes was 0.3 for the through holes with a diameter of 0.3 mm, and 0.95 for the through holes with a diameter of 1.4 mm.

The obtained decorative molded body had excellent shape retainability, without causing tearing of the skin material, deformation of the through holes, or fracture. Also, tearing, deformation of the through holes, or fracture did not occur even when the surface of the skin material was rubbed by a fingernail. In addition, the decorative molded body had excellent design quality in emitting light from the through holes when light is transmitted therethrough.

### (Comparative Example 1)

An artificial leather sheet C was produced in the same manner as in Example 1 except for forming circular through holes all having a diameter of 0.1 mm in Example 1, in place of the seven types of circular through holes with a diameter of 0.2 mm, 0.4 mm, 0.6 mm, 0.8 mm, 1.0 mm, 1.2 mm, or 1.4 mm.

Then, a preform molded body was molded in the same manner except for using the artificial leather sheet C in place of the artificial leather sheet A having a suede-like napped surface. At this time, the preform molded body of the artificial leather sheet C retained a tight shape conforming to the shape of the mold.

Then, a decorative molded body was obtained by performing insert molding in the same manner as in Example 1 except for using the preform molded body of the artificial leather sheet C in place of the preform molded body of the artificial leather sheet A. In the obtained decorative molded body, the resin molded body had not entered the through holes.

Although the obtained decorative molded body had excellent shape retainability, without causing tearing of the skin material, deformation of the through holes, or fracture, it had poor design quality due to poor light emission from the through holes when light was transmitted therethrough.

### (Comparative Example 2)

An artificial leather sheet D was produced in the same manner as in Example 1 except for forming circular through holes all having a diameter of 3.2 mm in Example 1, in place of the seven types of circular through holes having a diameter of 0.2 mm, 0.4 mm, 0.6 mm, 0.8 mm, 1.0 mm, 1.2 mm, or 1.4 mm.

Then, a preform molded body was molded in the same manner except for using the artificial leather sheet D in place of the artificial leather sheet A having a suede-like napped surface. At this time, the preform molded body of the artificial leather sheet D retained a tight shape conforming to the shape of the mold.

Then, a decorative molded body was obtained by performing insert molding in the same manner as in Example 1 except for using the preform molded body of the artificial leather sheet D in place of the preform molded body of the artificial leather sheet A. In the obtained decorative molded body, the molten resin slightly leaked from the through holes during insert molding, and the surface of the resin molded body protruded from the thorough holes.

### [Reference Signs List]

- 1.: Skin member
- 2.: Resin molded body
- 2a.: Molten resin
- 3.: Sheet
- 5.: Preform molded body
- 10.: Decorative molded body
- 12.: Light source
- 20.: Light-emitting structure
- h.: Through hole
- M.: Mesh-like region

## Claims

1. A decorative molded body (10) comprising:
a resin molded body (2): and
a skin material (1) that contains a fiber material and that is stacked on a surface of the resin molded body (2),
wherein the skin material has a through hole (h), and the surface of the resin molded body (2) is present in the through hole (h),
**characterized in that**
a ratio (Hr/d) of a height (Hr) of the surface of the resin molded body (2) relative to a depth (d) of the through hole (h) is 0.3 to 1,
wherein the height (Hr) is the height of the surface of the resin molded body (2) that has entered the through hole (h).

2. The decorative molded body (10) according to claim 1,
wherein the skin material (1) includes a mesh-like region (M) having a multiplicity of the through holes (h).

3. The decorative molded body (10) according to claim 1 or 2, wherein the through hole or through holes (h) have an average circle equivalent diameter in the range of 0.1 to 3 mm.

4. The decorative molded body (10) according to any one of claims 1 to 3,
wherein the resin molded body (2) has optical transmission.

5. The decorative molded body (10) according to any one of claims 1 to 4,
wherein the skin material (1) is an artificial leather.

6. The decorative molded body (10) according to claim 5,
wherein the artificial leather has a breaking elongation at 20°C of 50% or more.

7. The decorative molded body (10) according to claim 5 or 6, wherein the artificial leather has a breaking stress at 20°C of 50 N/2.5 cm or more.

8. A light-emitting structure (20) comprising:
the decorative molded body (10) according to any one of claims 1 to 7; and
a light source (12) disposed on the resin molded body side of the decorative molded body (10).

9. A production method of a decorative molded body (10), comprising the steps of:
housing, in a cavity (c) of an injection molding mold (32), a skin material (1) that contains a fiber material and that has a through hole (h); and
injecting a molten resin into the injection molding mold (32), thereby forming a decorative molded body (10) in which the skin material (1) is integrated with a surface of an injection-molded body that is molded,
wherein molding is performed such that the surface of the resin molded body (2) is present in the through hole (h),
**characterized in that**
a ratio (Hr/d) of a height (Hr) of the surface of the resin molded body (2) relative to a depth (d) of the through hole is 0.3 to 1,
wherein the height (Hr) is the height of the surface of the resin molded body (2) that has entered the through hole (h).

10. The production method of a decorative molded body (10) according to claim 9,
wherein the skin material (1) includes a mesh-like region (M) having a multiplicity of the through holes (h).

11. The production method of a decorative molded body (10) according to claim 9 or 10,
wherein the skin material (1) is shaped into a shape corresponding to a shape of the cavity (c), and is housed in the cavity (c).

12. The production method of a decorative molded body (10) according to any one of claims 9 to 11,
wherein the skin material (1) is an artificial leather.

## Patentansprüche

1. Dekorativer geformter Körper (10), aufweisend:
einen aus Harz geformten Körper (2); und
ein Hautmaterial (1), das ein Fasermaterial enthält und auf eine Oberfläche des aus Harz geformten Körpers (2) aufgebracht ist,
wobei das Hautmaterial ein Durchgangsloch (h) aufweist und die Oberfläche des aus Harz geformten Körpers (2) in dem Durchgangsloch (h) vorhanden ist,
**dadurch gekennzeichnet, dass**
ein Verhältnis (Hr/d) einer Höhe (Hr) der Oberfläche des aus Harz geformten Körpers (2) relativ zu einer Tiefe (d) des Durchgangslochs (h) 0,3 bis 1 beträgt,
wobei die Höhe (Hr) die Höhe der Oberfläche des aus Harz geformten Körpers (2) ist, die in das Durchgangsloch (h) hineinreicht.

2. Dekorativer geformter Körper (10) nach Anspruch 1,
wobei das Hautmaterial (1) einen netzartigen Bereich (M) mit einer Mehrzahl von Durchgangslöchern (h) aufweist.

3. Dekorativer geformter Körper (10) nach Anspruch 1 oder 2, wobei das Durchgangsloch bzw. die Durchgangslöcher (h) einen durchschnittlichen kreisäquivalenten Durchmesser im Bereich von 0,1 bis 3 mm aufweisen.

4. Dekorativer geformter Körper (10) nach einem der Ansprüche 1 bis 3,
wobei der aus Harz geformte Körper (2) eine optische Transmission aufweist.

5. Dekorativer geformter Körper (10) nach einem der Ansprüche 1 bis 4,
wobei das Hautmaterial (1) ein Kunstleder ist.

6. Dekorativer geformter Körper (10) nach Anspruch 5,
wobei das Kunstleder eine Bruchdehnung bei 20°C von 50% oder mehr aufweist.

7. Dekorativer geformter Körper (10) nach Anspruch 5 oder 6, wobei das Kunstleder eine Bruchspannung bei 20°C von 50 N/2,5 cm oder mehr aufweist.

8. Lichtemittierende Struktur (20), aufweisend:
den dekorativen geformten Körper (10) nach einem der Ansprüche 1 bis 7; und
eine Lichtquelle (12), die auf der Seite des aus Harz geformten Körpers des dekorativen geformten Körpers (10) angeordnet ist.

9. Verfahren zur Herstellung eines dekorativen geformten Körpers (10), aufweisend die folgenden Schritte:
Einbringen eines Hautmaterials (1), das ein Fasermaterial enthält und ein Durchgangsloch (h) aufweist, in einen Hohlraum (c) einer Spritzgussform (32); und
Einspritzen eines geschmolzenen Harzes in die Spritzgussform (32), wodurch ein dekorativer geformter Körper (10) gebildet wird, bei dem das Hautmaterial (1) an einer Oberfläche eines spritzgegossenen Körpers, der geformt wird, eingebunden wird,
wobei das Formen derart erfolgt, dass die Oberfläche des aus Harz geformten Körpers (2) in dem Durchgangsloch (h) vorhanden ist,
**dadurch gekennzeichnet, dass**
ein Verhältnis (Hr/d) einer Höhe (Hr) der Oberfläche des aus Harz geformten Körpers (2) relativ zu einer Tiefe (d) des Durchgangslochs (h) 0,3 bis 1 beträgt,
wobei die Höhe (Hr) die Höhe der Oberfläche des aus Harz geformten Körpers (2) ist, die in das Durchgangsloch (h) hineinreicht.

10. Verfahren zur Herstellung eines dekorativen geformten Körpers (10) nach Anspruch 9,
wobei das Hautmaterial (1) einen netzartigen Bereich (M) mit einer Mehrzahl von Durchgangslöchern (h) aufweist.

11. Verfahren zur Herstellung eines dekorativen geformten Körpers (10) nach Anspruch 9 oder 10,
wobei das Hautmaterial (1) in eine Form gebracht wird, die einer Form des Hohlraums (c) entspricht, und in den Hohlraum (c) eingebracht wird.

12. Verfahren zur Herstellung eines dekorativen geformten Körpers (10) nach einem der Ansprüche 9 bis 11,
wobei das Hautmaterial (1) ein Kunstleder ist.

## Revendications

1. Corps moulé décoratif (10) comprenant :
un corps moulé en résine (2) ; et
un matériau de revêtement (1) qui contient un matériau à base de fibres et qui est empilé sur une surface du corps moulé en résine (2),
dans lequel le matériau de revêtement présente un trou traversant (h), et la surface du corps moulé en résine (2) est présente dans le trou traversant (h),
**caractérisé en ce que**
un rapport (Hr/d) d'une hauteur (Hr) de la surface du corps moulé en résine (2) par rapport à une profondeur (d) du trou traversant (h) va de 0,3 à 1,
dans lequel la hauteur (Hr) est la hauteur de la surface du corps moulé en résine (2) qui est entrée dans le trou traversant (h).

2. Corps moulé décoratif (10) selon la revendication 1,
dans lequel le matériau de revêtement (1) comporte une zone de type maille (M) présentant une multitude de trous traversants (h).

3. Corps moulé décoratif (10) selon la revendication 1 ou 2, dans lequel le trou traversant ou les trous traversants (h) présentent un diamètre de cercle équivalent moyen dans la plage de 0,1 à 3 mm.

4. Corps moulé décoratif (10) selon l'une quelconque des revendications 1 à 3,
dans lequel le corps moulé en résine (2) présente une transmission optique.

5. Corps moulé décoratif (10) selon l'une quelconque des revendications 1 à 4,
dans lequel le matériau de revêtement (1) est un cuir artificiel.

6. Corps moulé décoratif (10) selon la revendication 5,
dans lequel le cuir artificiel présente un allongement à la rupture à 20 °C de 50 % ou plus.

7. Corps moulé décoratif (10) selon la revendication 5 ou 6, dans lequel le cuir artificiel présente une contrainte de rupture à 20 °C de 50 N/2,5 cm ou plus.

8. Structure électroluminescente (20) comprenant :
le corps moulé décoratif (10) selon l'une quelconque des revendications 1 à 7 ; et
une source de lumière (12) disposée sur le côté de corps moulé en résine du corps moulé décoratif (10).

9. Procédé de fabrication d'un corps moulé décoratif (10), comprenant les étapes :
de logement, dans une cavité (c) d'un moule de moulage par injection (32), d'un matériau de revêtement (1) qui contient un matériau à base de fibres et qui présente un trou traversant (h) ; et
d'injection d'une résine fondue dans le moule de moulage par injection (32), en formant ainsi un corps moulé décoratif (10), dans lequel le matériau de revêtement (1) est intégré à une surface d'un corps moulé par injection qui est moulé,
dans lequel le moulage est réalisé de telle sorte que la surface du corps moulé en résine (2) est présente dans le trou traversant (h),
**caractérisé en ce que**
un rapport (Hr/d) d'une hauteur (Hr) de la surface du corps moulé en résine (2) par rapport à une profondeur (d) du trou traversant (h) va de 0,3 à 1,
dans lequel la hauteur (Hr) est la hauteur de la surface du corps moulé en résine (2) qui est entrée dans le trou traversant (h).

10. Procédé de fabrication d'un corps moulé décoratif (10) selon la revendication 9,
dans lequel le matériau de revêtement (1) comporte une zone de type maille (M) présentant une multitude de trous traversants (h).

11. Procédé de fabrication d'un corps moulé décoratif (10) selon la revendication 9 ou 10,
dans lequel le matériau de revêtement (1) est mis en forme en une forme correspondant à une forme de la cavité (c) et est logé dans la cavité (c).

12. Procédé de fabrication d'un corps moulé décoratif (10) selon l'une quelconque des revendications 9 à 11,
dans lequel le matériau de revêtement (1) est un cuir artificiel.
